# EUROPÄISCHE PATENTSCHRIFT

(11) **EP 3 649 523 B1**
(45) Veröffentlichungstag und Bekanntmachung des Hinweises auf die Patenterteilung: **16.03.2022**
(21) Anmeldenummer: 18733189.7
(22) Anmeldetag: 04.06.2018
(51) Int. Cl.: G05D 1/02, G01C 21/28, G06K 9/00

(54) **VERFAHREN ZUM BETREIBEN EINES HÖHER AUTOMATISIERTEN FAHRZEUGS (HAF), INSBESONDERE EINES HOCHAUTOMATISIERTEN FAHRZEUGS**
METHOD FOR OPERATING A MORE HIGHLY AUTOMATED VEHICLE, IN PARTICULAR A HIGHLY AUTOMATED VEHICLE
PROCÉDÉ POUR FAIRE FONCTIONNER UN VÉHICULE TRÈS AUTOMATISÉ, EN PARTICULIER UN VÉHICULE FORTEMENT AUTOMATISÉ

(30) Priorität: 07.07.2017 DE 102017211626
(43) Veröffentlichungstag der Anmeldung: 13.05.2020
(73) Patentinhaber: Robert Bosch GmbH, 70442 Stuttgart (DE)
(72) Erfinder: HASBERG, Carsten, 74360 Ilsfeld-Auenstein (DE); PAULS, Jan-Hendrik, 71723 Grossbottwar (DE)
(86) Internationale Anmeldenummer: PCT/EP2018/064632
(87) Internationale Veröffentlichungsnummer: WO 2019/007604

(56) Entgegenhaltungen:
- WO-A1-2009/098154
- US-A1- 2010 328 462
- US-A1- 2015 233 720

## Beschreibung

Die Erfindung betrifft ein Verfahren zum Betreiben eines höher automatisierten Fahrzeugs (HAF), insbesondere eines hochautomatisierten Fahrzeugs und ein Fahrerassistenzsystem zur Steuerung eines höher automatisierten Fahrzeugs (HAF), insbesondere eines hochautomatisierten Fahrzeugs.

### Stand der Technik

Angesichts einer Zunahme des Automatisierungsgrades von Fahrzeugen werden immer komplexere Fahrerassistenzsysteme eingesetzt. Für solche Fahrerassistenzsysteme und Funktionen, wie z.B. dem hochautomatisierten Fahren oder dem vollautomatisiertem Fahren, wird eine große Zahl von Sensoren im Fahrzeug benötigt, die eine exakte Erfassung des Fahrzeugumfelds ermöglichen.

Im Folgenden werden unter höher automatisiert all diejenigen Automatisierungsgrade verstanden, die im Sinne der Bundesanstalt für Straßenwesen (BASt) eine automatisierte Längs- und Querführung mit steigender Systemverantwortung entsprechen, z.B. das hoch- und vollautomatisierte Fahren.

Im Stand der Technik ist eine Vielzahl von Möglichkeiten offenbart, ein Verfahren zum Betreiben eines hochautomatisierten Fahrzeugs (HAF) durchzuführen. Um dabei die Lokalisierung eines hochautomatisierten Fahrzeugs (HAF) in einer digitalen Karte zu erhöhen, ist es erforderlich, die Genauigkeit der digitalen Karte garantieren zu können, wobei hier das Problem auftritt, dass kurzfristige Streckenänderungen, die beispielsweise durch Baustellen, Unfälle oder andersartige Umstände bedingt sind, nicht oder nur unvollständig in digitalen Karten berücksichtigt werden können oder derart kurzfristig auftreten, dass ein höher automatisiertes Fahrzeug (HAF), insbesondere ein hochautomatisiertes Fahrzeug, über diese kurzfristigen Änderungen nicht schnell genug verfügen kann und die Steuerung des Fahrzeugs dem Fahrer überlassen werden muss. Dies kann unerwünscht und gegebenenfalls auch kritisch hinsichtlich der Verkehrssicherheit sein.

Um das Fahrzeug in möglichst allen Situationen höher automatisiert zu steuern, ist es notwendig, eine weitestgehend fehlerfreie und der Wirklichkeit entsprechende digitale Karte zur Verfügung zu haben.

Es ist bekannt, dass anhand von verschiedenen Umfeldsensoren, wie beispielsweise Radarsensoren, Kameras, Fahrdynamiksensoren, GPS (Global Positioning System) und digitalen Karten eine Repräsentation der Fahrzeugumgebung, das sogenannte Umfeldmodell, aufgebaut werden kann, wobei durch einen Vergleich der Sensordaten bzw. des Umfeldmodells mit der digitalen Karte die Aktualität einer digitalen Karte validiert und gegebenenfalls erhöht werden kann. Weisen Umfeldmodell und digitale Karte nennenswerte Abweichungen auf, ist davon auszugehen, dass die Karte nicht auf dem aktuellen Stand ist und nur noch eingeschränkt verwendet werden kann.

Als problematisch ist in diesem Zusammenhang jedoch anzusehen, dass die Auflösung gängiger Sensoren in der Ferne in der Regel gering ist und die Daten daher mit einem mehr oder weniger stark ausgeprägten Rauschanteil behaftet sind, der eine verlässliche Auswertung erschwert oder gar unmöglich macht. Im Stand der Technik konzentrieren sich Algorithmen zur Positionsermittlung auf Basis der Daten von Umfeldsensoren daher primär auf den mit höherer Sicherheit wahrnehmbaren Nahbereich.

Dies stellt jedoch gerade beim Fahren mit hoher Geschwindigkeit einen Sicherheitsmangel dar, da nur dann ein rechtzeitiges Reagieren auf die oft kleinen Streckenänderungen möglich ist, wenn ausreichend weit entfernte Umgebungsmerkmale zur Kartenvalidierung herangezogen werden können. Auch lassen sich bestimmte auf den Sensordaten basierende Berechnungen mit höherer Genauigkeit durchführen, wenn die als Referenz herangezogenen Merkmale möglichst weit entfernt sind, beispielsweise die Rückschlüsse auf die Rotationswinkel der eingesetzten Sensorik im Verhältnis zur Ausrichtung der digitalen Karte.

Aus WO 2009/098154 A1 ist ein Verfahren zum Betreiben eines höher automatisierten Fahrzeugs bekannt, wobei eine digitale Karte einem Fahrerassistenzsystem des Fahrzeugs zur Verfügung gestellt wird, wobei eine aktuelle Fahrzeugposition und eine Lokalisierung der Fahrzeugposition in der digitalen Karte durchgeführt wird, wobei eine Merkmalseigenschaft eines Merkmals in einer Umgebung des Fahrzeuges zur Verfügung gestellt wird, wobei eine Merkmalseigenschaft eines Merkmals in der Umgebung des Fahrzeugs detektiert wird. Mithilfe des detektierten Merkmals und des vorgegebenen Merkmals werden Map-Matching-Verfahren durchgeführt. Dabei wird mithilfe einer Hausdorff-Technik für das detektierte Merkmal und das vorgegebene Merkmal mithilfe eines Kantenerkennungsverfahrens Polygone ermittelt. Aufgrund der ermittelten Polygone wird eine Hausdorff-Distanz ermittelt. Das Ergebnis der Hausdorff-Distanz wird mit Schwellwerten verglichen, um zu bestimmen, ob eine ausreichend hohe Übereinstimmung erhalten wurde.

Aus US 2015/0233720 A1 ist ebenfalls ein Verfahren zum Betreiben eines höher automatisierten Fahrzeuges bekannt, bei dem eine digitale Karte einem Fahrerassistenzsystem zur Verfügung gestellt wird, wobei eine aktuelle Fahrzeugposition bestimmt und die Fahrzeugposition in der digitalen Karte lokalisiert wird, wobei eine Soll-Merkmalseigenschaft eines Merkmals in einer Umgebung des Fahrzeugs zur Verfügung gestellt wird, wobei eine Ist-Merkmalseigenschaft des Merkmals in der Umgebung des Fahrzeuges ermittelt wird, wobei die Ist-Merkmalseigenschaft mit der Soll-Merkmalseigenschaft verglichen wird.

Aus US 2010/0328462 A1 ist ein Verfahren zum Erkennen von Verkehrsschildern auf der Basis von Bildern bekannt, um eine Navigationsdatenbank aufzubauen. Dabei werden eine Vielzahl von Bildern einer Umgebung entlang einer Straße aufgenommen, wobei ein Bild der Vielzahl der Bilder ausgewählt wird, wobei eine Komponente, die mit einem Objekt des ausgewählten Bildes korrespondiert, bestimmt wird, wobei das bestimmte Objekt mit Referenzobjekten in einer Datenbank verglichen wird, wobei, wenn basierend auf dem Vergleich eine Übereinstimmung mit der Referenzkomponente erkannt wird, das Objekt als Textmuster eines Verkehrszeichens identifiziert wird. Für die Identifizierung des Objektes können invariante Komponenten des Bildes bestimmt werden, wobei invariante Komponenten, die nicht nahe an weiteren invarianten Komponenten liegen, von der weiteren Verarbeitung ausgenommen werden.

Es ist daher eine Aufgabe der vorliegenden Erfindung, ein verbessertes Verfahren zum Betreiben eines höher automatisierten Fahrzeugs (HAF), insbesondere eines hochautomatisierten Fahrzeugs und ein verbessertes Fahrerassistenzsystem zur Steuerung eines höher automatisierten Fahrzeugs (HAF), insbesondere eines hochautomatisierten Fahrzeugs bereitzustellen, mit dem eine gesicherte Auskunft über die Qualität von Sensordetektionen auch im Fernbereich möglich ist, und mit dem letztlich Streckenänderungen gegenüber einem in einer digitalen Karte abgespeicherten Streckenstatus, kurz auch Kartenfehler genannt, frühzeitig und robust erkannt werden können, und das somit eine verbesserte Validierung einer digitalen Karte leistet.

### Offenbarung der Erfindung

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Betreiben eines höher automatisierten Fahrzeugs (HAF), insbesondere eines hochautomatisierten Fahrzeugs bereitgestellt, umfassend die folgenden Schritte:
S1 zur Verfügung stellen einer digitalen Karte, vorzugsweise einer hochgenauen digitalen Karte, in einem Fahrerassistenzsystem des HAF ;
S2 Bestimmung einer aktuellen Fahrzeugposition und Lokalisierung der Fahrzeugposition in der digitalen Karte;
S3 zur Verfügung stellen einer Soll-Merkmalseigenschaft eines Merkmals in einer Umgebung des HAF, wobei die Soll-Merkmalseigenschaft des Merkmals in der digitalen Karte gespeichert ist; wobei eine Gruppe von Soll-Merkmalseigenschaften einer Gruppe von Merkmalen zur Verfügung gestellt wird, wobei die Soll-Merkmalseigenschaften der Merkmale in der digitalen Karte gespeichert sind;
S4 Detektieren von Ist-Merkmalseigenschaften der Merkmale in der Umgebung des HAF für die Merkmalseigenschaften der Soll-Merkmalseigenschaft der Merkmale, wobei die Soll-Merkmalseigenschaft sowie die Ist-Merkmalseigenschaft jeweils eine gleiche Eigenschaft der folgenden Eigenschaften des Merkmals sind: geographische Position, Abmessungen, Farbe, relative Lage bezüglich des HAF;
S5 Vergleich der Ist-Merkmalseigenschaften mit den Soll-Merkmalseigenschaften und Ermittlung von Differenzwerten zwischen den Ist-Merkmalseigenschaften und den Soll-Merkmalseigenschaften der Merkmale;
S6 Plausibilisierung der Ist-Merkmalseigenschaften zumindest teilweise auf Grundlage der Differenzwerte, wobei eine Ist-Merkmalseigenschaft eines einzelnen Merkmals aus der Gruppe als Fehldetektion verworfen wird, wenn die Differenzwerte der restlichen Merkmale der Gruppe einen festgelegten Schwellwert einer Abweichung überschreiten;
S7 Erneute Bestimmung der aktuellen Fahrzeugposition zumindest teilweise anhand der Ist-Merkmalseigenschaft.

Die Soll-Merkmalseigenschaft eines Merkmals ist eine a-priori-Information, die beispielsweise in der digitalen Karte enthalten ist. Beispiele für Merkmale sind Straßenmarkierungen, Leitpfosten, Schutzplanken, Lichtsignalanlagen und Verkehrszeichen. Die Soll-Merkmalseigenschaften dieser Merkmale können die geographische Position, die Abmessungen, Farbe, oder relative Lage dieser Merkmale bezüglich des HAF sein.

Durch die Vorgabe der Merkmale und Merkmalseigenschaften kann der Suchbereich der Fahrzeugsensorik bei der Erkennung der Merkmale im Fahrzeugumfeld von vornherein eingeschränkt werden, was ein robusteres Auffinden der Merkmale in der Umgebung des HAF, somit das Detektieren der Ist-Merkmalseigenschaft der Merkmale ermöglicht.

Durch den Vergleich der Soll-Merkmalseigenschaft mit der Ist-Merkmalseigenschaft kann ein mit der Übereinstimmung der Merkmalseigenschaften korrespondierender Differenzwert ermittelt werden, der ein Maß für die Höhe bzw. die Qualität der Übereinstimmung ist. Bei guter Übereinstimmung ist die aufgefundene Ist-Merkmalseigenschaft als gesicherte Sensordetektion anzusehen, bei mangelnder Übereinstimmung wird die Sensordetektion als Fehldetektion verworfen. Auf diese Weise bietet die Erfindung eine gesicherte Auskunft über die Qualität von Sensordetektionen auch im Fernbereich, was mit den bisher bekannten Verfahren überhaupt nicht oder nicht in ausreichender Weise möglich war.

Vorzugsweise beinhaltet das erfindungsgemäße Verfahren den Schritt einer erneuten Bestimmung der aktuellen Fahrzeugposition zumindest teilweise anhand der Ist-Merkmalseigenschaft. Da die Ist-Merkmalseigenschaft nach dem Vergleich mit der Soll-Merkmalseigenschaft plausibilisiert ist, kann die aktuelle Fahrzeugposition mit den in der Umfeldsensorik bekannten Mitteln durchgeführt werden.

In einer weiteren Ausführungsform der Erfindung beinhaltet das Verfahren, dass die zumindest eine Soll-Merkmalseigenschaft des zumindest einen Merkmals in der digitalen Karte gespeichert ist, wobei vorzugsweise eine Mehrzahl an Soll-Merkmalseigenschaften wiederum einer Mehrzahl an Merkmalen in der digitalen Karte gespeichert sind.

Für das weitere Vorgehen ist es vorgesehen, dass der Schritt S6 beinhaltet, dass eine Ist-Merkmalseigenschaft als Fehldetektion verworfen wird, wenn der Differenzwert einen festgelegten Schwellwert einer Abweichung überschreitet. Der Schwellwert der Abweichung richtet sich hierbei beispielsweise nach der Natur der detektierten Merkmalseigenschaft, beispielsweise ob es sich dabei um eine Fahrbahnmarkierung (kurzfristige Änderung ist wahrscheinlicher, niedrige Fehlertoleranz) oder um eine Lichtsignalanlage (kurzfristige Änderung ist eher unwahrscheinlich, höhere Fehlertoleranz handelt).

In einer vorteilhaften Ausführungsform der Erfindung beinhaltet das Verfahren, dass in Schritt S3 eine Gruppe von Soll-Merkmalseigenschaften einer Gruppe von Soll-Merkmalen zur Verfügung gestellt wird, und dass der Schritt S6 beinhaltet, dass eine Ist-Merkmalseigenschaft eines einzelnen Merkmals aus der Gruppe als Fehldetektion verworfen wird, wenn die Differenzwerte der restlichen Merkmale der Gruppe einen festgelegten Schwellwert einer Abweichung überschreiten. Dies kann von Vorteil sein, wenn beispielsweise die Positionen einer Gruppe von Spurmarkierungen, etwa Fahrbahnmittelmarkierungen, als Gruppe von Soll-Merkmalseigenschaften vorgegeben wird. Wird als Ist-Merkmalseigenschaft lediglich die Position einer einzigen dieser Fahrbahnmittelmarkierungen detektiert und alle anderen nicht, so wird nur ein einziger Differenzwert eine Übereinstimmung von Soll- und Ist-Merkmalseigenschaft ergeben und alle anderen Differenzwerte nicht. Hier wäre dann davon auszugehen, dass es sich auch bei der Detektion der einen Fahrbahnmittelmarkierung um eine Fehldetektion handelt.

Einen weiteren Gegenstand der Erfindung bildet ein Fahrerassistenzsystem zur Steuerung eines höher automatisierten Fahrzeugs (HAF), insbesondere eines hochautomatisierten Fahrzeugs, umfassend
zumindest einen Sensor zur Erfassung einer Ist-Merkmalseigenschaft eines Merkmals in der Umgebung des HAF ;
ein Speichermodul (12) zur Speicherung einer digitalen Karte, vorzugsweise einer hochgenauen digitalen Karte, wobei das Speichermodul insbesondere ein in das HAF integriertes Speichermodul oder ein zentraler Server ist;
ein Positionsmodul (14) zur Bestimmung einer Fahrzeugposition des HAF, wobei das Positionsmodul (14) vorzugsweise ein GPS-Modul (Global Positioning System) ist;
eine Steuervorrichtung (18), die dazu eingerichtet ist, Daten mit dem Speichermodul (12) und dem Positionsmodul (14) auszutauschen und die durch das Positionsmodul (14) bestimmte Fahrzeugposition in der digitalen Karte zu lokalisieren.

Das erfindungsgemäße Fahrerassistenzsystem ist dadurch gekennzeichnet, dass die Steuervorrichtung zur Durchführung eines Verfahrens nach einem der Ansprüche 1 oder 2 eingerichtet ist.

In einer Ausführungsform der Erfindung ist der zumindest eine Sensor aus der Gruppe der folgenden Sensoren ausgewählt: Beschleunigungssensoren, Kamerasensoren, Radarsensoren, Lidarsensoren.

Ferner bildet auch Computerprogramm, umfassend Programmcode zur Durchführung des Verfahrens nach einem der Ansprüche 1 oder 2, wenn das Computerprogramm auf einem Computer ausgeführt wird, einen Gegenstand der Erfindung.

Obwohl die vorliegende Erfindung im Folgenden hauptsächlich in Zusammenhang mit Personenkraftwagen beschrieben wird, ist sie darauf nicht beschränkt, sondern kann mit jeder Art von Fahrzeug Lastkraftfahrzeuge (LKW) und/oder Personenkraftwagen (PKW) genutzt werden.

Weitere Merkmale, Anwendungsmöglichkeiten und Vorteile der Erfindung ergeben sich aus der nachfolgenden Beschreibung der Ausführungsbeispiele der Erfindung, welche in den Figuren dargestellt ist. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden anhand eines bevorzugten Ausführungsbeispiels näher erläutert, wobei für gleiche Merkmale gleiche Bezugszeichen verwendet werden. Die Zeichnungen sind schematisch und zeigen:
- Fig. 1: ein Ablaufschema einer ersten Ausführungsform des erfindungsgemäßen Verfahrens;
- Fig. 2: eine schematische Darstellung der Umsetzung einer zweiten Ausführungsform des erfindungsgemäßen Verfahrens; und
- Fig. 3: ein Ablaufschema einer dritten Ausführungsform des erfindungsgemäßen Verfahrens.

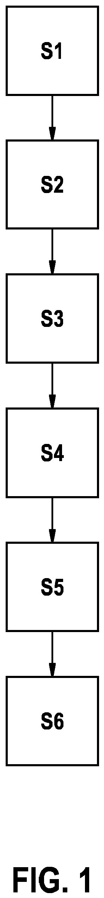

In Schritt S1 der Figur 1 wird eine digitale Karte, vorzugsweise eine hochgenaue digitale Karte zur Verfügung gestellt, was vorrichtungsseitig in einem Speichermodul zur Speicherung der digitalen Karte geschehen kann, wobei das Speichermodul insbesondere ein in das HAF integriertes Speichermodul oder ein zentraler Server ist.

Schritt S2 beinhaltet die Bestimmung einer aktuellen Fahrzeugposition und Lokalisierung der Fahrzeugposition in der digitalen Karte, wie es im Stand der Technik hinreichend bekannt ist. Vorrichtungsseitig geschieht dies erfindungsgemäß mittels eines Positionsmoduls, wobei das Positionsmodul vorzugsweise ein GPS-Modul (Global Positioning System) ist.

Der in Figur 1 als S3 bezeichnete Schritt umfasst das zur Verfügung stellen von zumindest einer Soll-Merkmalseigenschaft zumindest eines Merkmals in einer Umgebung des HAF.

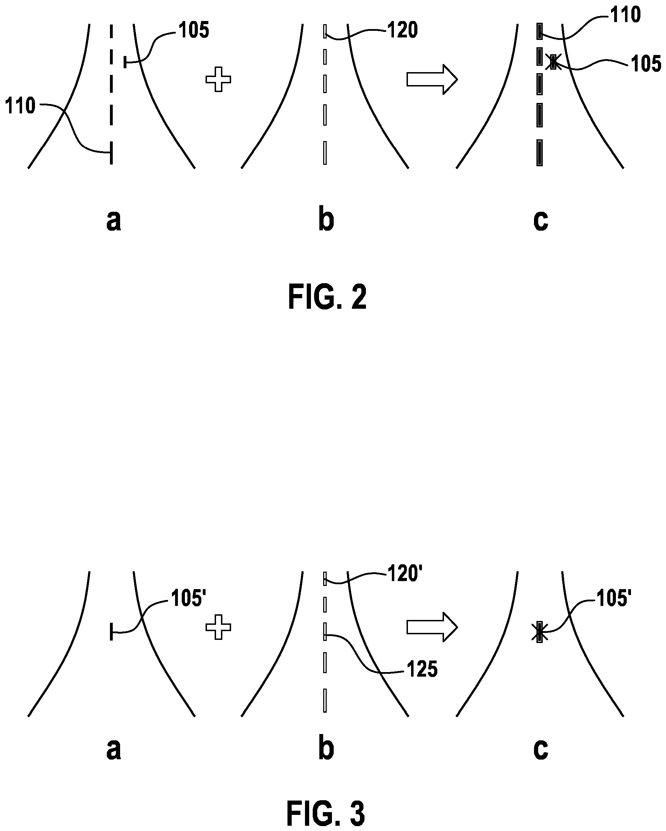

In Figur 2b ist als Beispiel dieses Schritts die Karteninformation abgebildet, dass eine Anzahl Fahrbahnmittelmarkierungen 120 in der Umgebung des HAF aufzufinden sind. Soll-Merkmalseigenschaften dieser Merkmale Fahrbahnmittelmarkierungen 120 sind beispielsweise ihre geographische Position, Abmessungen, Farbe und ihre relative Lage bezüglich des HAF, in diesem Fall der Vorausbereich.

In Figur 2a ist der in Figur 1 mit Schritt S4 bezeichnete Verfahrensschritt der Erfindung illustriert, der das Detektieren von zumindest einer Ist-Merkmalseigenschaft eines Merkmals in der Umgebung des HAF zumindest teilweise auf Grundlage der Soll-Merkmalseigenschaft umfasst. Vorrichtungsmäßig ist hierfür zumindest ein Sensor zur Erfassung der Ist-Merkmalseigenschaft des Merkmals in der Umgebung des HAF vorgesehen sowie eine Steuervorrichtung, die unter anderem dazu eingerichtet ist, Daten mit dem zumindest einen Sensor, dem Speichermodul und dem Positionsmodul auszutauschen und die durch das Positionsmodul bestimmte Fahrzeugposition in der digitalen Karte zu lokalisieren. Der Sensor ist dabei aus der Gruppe der folgenden Sensoren ausgewählt: Beschleunigungssensoren, Kamerasensoren, Radarsensoren, Lidarsensoren.

Vorteilhaft hierbei ist, dass die Sensorik durch die Einschränkung des Suchbereichs durch die Soll-Merkmalseigenschaften schnelle Ergebnisse liefert und robust funktioniert.

Man erkennt in Figur 2a, dass der zumindest eine Sensor eine Reihe von Fahrbahnmittelmarkierungen 110 detektiert sowie ein Merkmal 105, das prinzipiell ebenfalls eine Fahrbahnmittelmarkierung, aber auch eine Fehldetektierung sein könnte. Die hiermit verbundene Unsicherheit in Anbetracht des eingeschränkten Auflösungsvermögens der Sensorik im Fernbereich führt zu dem im Stand der Technik verbreiteten und eingangs geschilderten Problem, dass herkömmliche Verfahren zur Kartenvalidierung prinzipiell Merkmale im Fernbereich nicht oder nur sehr eingeschränkt berücksichtigen.

Erfindungsgemäß wird nun in Schritt S5 ein Vergleich der Ist-Merkmalseigenschaften der Merkmale 110 mit den Soll-Merkmalseigenschaften der Merkmale 120 durchgeführt. Als Ergebnis liefert der Schritt S5 zumindest einen Differenzwert, der als Grundlage einer in Schritt S6 durchgeführten Plausibilisierung der Ist-Merkmalseigenschaft dient.

Wie in Figur 2c zu erkennen ist, liefert dieser Vergleich im vorliegenden Fall für die Merkmalseigenschaften geographische Position, Abmessungen, Farbe relative Lage bezüglich des HAF der Merkmale 120 solche Differenzwerte, die innerhalb eines festgelegten Schwellwert liegen, das heißt vorhandene Übereinstimmung. Die Sensordaten der Ist-Merkmalseigenschaften der Merkmale 110 sind somit plausibel und können weiterverwendet werden.

Demgegenüber liefert der Vergleich für die Merkmalseigenschaften des Merkmals 105 einen solchen Differenzwert, der einen festgelegten Schwellwert einer Abweichung überschreitet, das heißt keine Übereinstimmung. Die Sensordaten der Ist-Merkmalseigenschaften des Merkmals 105 sind somit nicht plausibel und die Detektion wird als Fehldetektion verworfen.

In ähnlicher Weise kann anhand der Figur 3 eine weitere bevorzugte Ausführungsform der Erfindung nachvollzogen werden. Hier wird wiederum in Schritt S3 eine Gruppe von Soll-Merkmalseigenschaften einer Gruppe von Soll-Merkmalen 120', wieder Fahrbahnmittelmarkierungen, zur Verfügung gestellt, was in Figur 3b dargestellt ist. Eine der Fahrbahnmittelmarkierungen ist mit der Bezugsnummer 125 gekennzeichnet.

Die Sensordaten liefern, wie in Figur 3b zu erkennen ist, in Schritt S4 zwar Ist-Merkmalseigenschaften des detektierten Merkmals 105', deren Differenzwerte in Bezug auf die Soll-Sensordaten des Merkmals 125 dazu führen könnten, dass das die Detektierung des Merkmals 105' als plausibel angesehen wird, somit als Fahrbahnmittelmarkierung. In der hier diskutierten Ausführungsform der Erfindung ist jedoch vorgesehen, dass eine Ist-Merkmalseigenschaft eines einzelnen Merkmals aus der Gruppe als Fehldetektion verworfen wird, wenn die Differenzwerte der restlichen Merkmale der Gruppe einen festgelegten Schwellwert einer Abweichung überschreiten. Dies ist im Beispiel der Figur 3 der Fall bei den restlichen Fahrbahnmittelmarkierungen 120', die durch den Sensor nicht detektiert worden sind. Es ist also hier keine Übereinstimmung zischen Soll- und Ist-Merkmalseigenschaften zu erkennen. Dementsprechend wird auch das detektierte Merkmal 105 nicht als Fahrbahnmittelmarkierung anerkannt sondern als Fehldetektion verworfen (siehe Figur 3c).

## Patentansprüche

1. Verfahren zum Betreiben eines höher automatisierten Fahrzeugs (HAF), insbesondere eines hochautomatisierten Fahrzeugs, umfassend die Schritte:
S1 zur Verfügung stellen einer digitalen Karte, vorzugsweise einer hochgenauen digitalen Karte, in einem Fahrerassistenzsystem des HAF;
S2 Bestimmung einer aktuellen Fahrzeugposition und Lokalisierung der Fahrzeugposition in der digitalen Karte;
S3 zur Verfügung stellen einer Soll-Merkmalseigenschaft eines Merkmals in einer Umgebung des HAF, wobei die Soll-Merkmalseigenschaft des Merkmals in der digitalen Karte gespeichert ist, wobei eine Gruppe von Soll-Merkmalseigenschaften einer Gruppe von Merkmalen zur Verfügung gestellt wird, wobei die Soll-Merkmalseigenschaften der Merkmale in der digitalen Karte gespeichert sind;
S4 Detektieren von Ist-Merkmalseigenschaften für die Merkmalseigenschaften der Soll-Merkmalseigenschaften der Gruppe der Merkmale in der Umgebung des HAF mithilfe eines Sensors; wobei die Soll-Merkmalseigenschaft sowie die Ist-Merkmalseigenschaft jeweils eine gleiche Eigenschaft der folgenden Eigenschaften des Merkmals sind: geographische Position, Abmessungen, Farbe, relative Lage bezüglich des HAF;
S5 Vergleich der Ist-Merkmalseigenschaften mit den Soll-Merkmalseigenschaften und Ermittlung von Differenzwerten zwischen den Ist-Merkmalseigenschaften und den Soll-Merkmalseigenschaften der Merkmale;
S6 Plausibilisierung der Ist-Merkmalseigenschaften zumindest teilweise auf Grundlage der Differenzwerte, wobei eine Ist-Merkmalseigenschaft eines einzelnen Merkmals aus der Gruppe als Fehldetektion verworfen wird, wenn die Differenzwerte der restlichen Merkmale der Gruppe einen festgelegten Schwellwert einer Abweichung überschreiten;
S7 Erneute Bestimmung der aktuellen Fahrzeugposition zumindest teilweise anhand der Ist-Merkmalseigenschaft.

2. Verfahren nach Anspruch 1, **dadurch gekennzeichnet, dass** das Merkmal eine Straßenmarkierung, ein Leitpfosten, eine Schutzplanke, eine Lichtsignalanlage, und/oder ein Verkehrszeichen ist.

3. Fahrerassistenzsystem zur Steuerung eines höher automatisierten Fahrzeugs (HAF), insbesondere eines hochautomatisierten Fahrzeugs, umfassend
• zumindest einen Sensor zur Erfassung einer Ist-Merkmalseigenschaft eines Merkmals in der Umgebung des HAF ;
• ein Speichermodul (12) zur Speicherung einer digitalen Karte, vorzugsweise einer hochgenauen digitalen Karte, wobei das Speichermodul insbesondere ein in das HAF integriertes Speichermodul oder ein zentraler Server ist;
• ein Positionsmodul (14) zur Bestimmung einer Fahrzeugposition des HAF, wobei das Positionsmodul (14) vorzugsweise ein GPS-Modul (Global Positioning System) ist;
• eine Steuervorrichtung (18), die dazu eingerichtet ist, Daten mit dem Speichermodul (12) und dem Positionsmodul (14) auszutauschen und die durch das Positionsmodul (14) bestimmte Fahrzeugposition in der digitalen Karte zu lokalisieren,
**dadurch gekennzeichnet, dass**
die Steuervorrichtung zur Durchführung eines Verfahrens nach einem der Ansprüche 1 oder 2 eingerichtet ist.

4. Fahrerassistenzsystem nach Anspruch 3, **dadurch gekennzeichnet, dass** der zumindest eine Sensor aus der Gruppe der folgenden Sensoren ausgewählt ist: Beschleunigungssensoren, Kamerasensoren, Radarsensoren, Lidarsensoren.

5. Computerprogramm, umfassend Programmcode zur Durchführung des Verfahrens nach einem der Ansprüche 1 oder 2, wenn das Computerprogramm auf einem Computer ausgeführt wird.

## Claims

1. Method for operating a more highly automated vehicle, in particular a highly automated vehicle, comprising the steps of:
S1 providing a digital map, preferably a highly accurate digital map, in a driver assistance system of the more highly automated vehicle;
S2 determining a current vehicle position and locating the vehicle position in the digital map;
S3 providing a target feature property of a feature in an environment of the more highly automated vehicle, wherein the target feature property of the feature is stored in the digital map, wherein a group of target feature properties of a group of features is provided, wherein the target feature properties of the features are stored in the digital map;
S4 detecting actual feature properties for the feature properties of the target feature properties of the group of features in the environment of the more highly automated vehicle with the aid of a sensor, wherein the target feature property and the actual feature property are each an identical property of the following properties of the feature: geographical position, dimensions, colour, relative position with respect to the more highly automated vehicle;
S5 comparing the actual feature properties with the target feature properties and determining difference values between the actual feature properties and the target feature properties of the features;
S6 checking the plausibility of the actual feature properties at least partially on the basis of the difference values,
wherein an actual feature property of an individual feature from the group is rejected as false detection if the difference values of the remaining features in the group exceed a stipulated threshold value of a deviation;
S7 determining the current vehicle position again at least partially on the basis of the actual feature property.

2. Method according to Claim 1, **characterized in that** the feature is a road marking, a reflector post, a crash barrier, a traffic light system and/or a road sign.

3. Driver assistance system for controlling a more highly automated vehicle, in particular a highly automated vehicle, comprising
• at least one sensor for capturing an actual feature property of a feature in the environment of the more highly automated vehicle;
• a storage module (12) for storing a digital map, preferably a highly accurate digital map, wherein the storage module is, in particular, a storage module integrated in the more highly automated vehicle or a central server;
• a position module (14) for determining a vehicle position of the more highly automated vehicle, wherein the position module (14) is preferably a GPS module (Global Positioning System);
• a control apparatus (18) which is configured to interchange data with the storage module (12) and the position module (14) and to locate the vehicle position determined by the position module (14) in the digital map,
**characterized in that**
the control apparatus is configured to carry out a method according to either of Claims 1 and 2.

4. Driver assistance system according to Claim 3, **characterized in that** the at least one sensor is selected from the group of the following sensors:
acceleration sensors, camera sensors, radar sensors, lidar sensors.

5. Computer program comprising program code for carrying out the method according to either of Claims 1 and 2 when the computer program is executed on a computer.

## Revendications

1. Procédé permettant de faire fonctionner un véhicule très automatisé (VTA), en particulier un véhicule hautement automatisé, comprenant les étapes consistant à :
S1 fournir une carte numérique, de préférence une carte numérique de grande précision, dans un système d'assistance au conducteur du VTA ;
S2 déterminer une position de véhicule actuelle et localiser la position de véhicule sur la carte numérique ;
S3 fournir une propriété de caractéristique théorique d'une caractéristique dans un environnement du VTA, la propriété de caractéristique théorique de la caractéristique étant mémorisée sur la carte numérique, un groupe de propriétés de caractéristique théoriques d'un groupe de caractéristiques étant fourni, les propriétés de caractéristique théoriques des caractéristiques étant mémorisées sur la carte numérique ;
S4 détecter des propriétés de caractéristique réelles pour les propriétés de caractéristique des propriétés de caractéristique théoriques du groupe des caractéristiques dans l'environnement du VTA à l'aide d'un capteur ; la propriété de caractéristique théorique ainsi que la propriété de caractéristique réelle étant respectivement une même propriété parmi les propriétés suivantes de la caractéristique : la position géographique, les dimensions, la couleur, la situation relative par rapport au VTA ;
S5 comparer les propriétés de caractéristique réelles aux propriétés de caractéristique théoriques et établir des valeurs différentielles entre les propriétés de caractéristique réelles et les propriétés de caractéristique théoriques des caractéristiques ;
S6 plausibiliser les propriétés de caractéristique réelles au moins en partie sur la base des valeurs différentielles, une propriété de caractéristique réelle d'une caractéristique individuelle issue du groupe étant rejetée comme une détection erronée lorsque les valeurs différentielles des caractéristiques restantes du groupe dépassent une valeur seuil définie d'un écart ;
S7 déterminer à nouveau la position de véhicule actuelle au moins en partie à l'aide de la propriété de caractéristique réelle.

2. Procédé selon la revendication 1, **caractérisé en ce que** la caractéristique est un marquage au sol, un délinéateur, une glissière de sécurité, un feu de signalisation et/ou un panneau de signalisation.

3. Système d'assistance au conducteur permettant de commander un véhicule très automatisé (VTA), en particulier un véhicule hautement automatisé, comprenant
• au moins un capteur servant à détecter une propriété de caractéristique réelle d'une caractéristique dans l'environnement du VTA ;
• un module de mémoire (12) pour mémoriser une carte numérique, de préférence une carte numérique de grande précision, le module de mémoire étant en particulier un module de mémoire intégré dans le VTA ou un serveur central ;
• un module de positionnement (14) servant à déterminer une position de véhicule du VTA, le module de positionnement (14) étant de préférence un module GPS (système de positionnement global) ;
• un dispositif de commande (18) qui est conçu pour échanger des données avec le module de mémoire (12) et le module de positionnement (14) et pour localiser sur la carte numérique la position de véhicule déterminée par le module de positionnement (14),
**caractérisé en ce que** le dispositif de commande est conçu pour exécuter un procédé selon l'une quelconque des revendications 1 ou 2.

4. Système d'assistance au conducteur selon la revendication 3, **caractérisé en ce que** ledit au moins un capteur est sélectionné dans le groupe des capteurs suivants : des capteurs d'accélération, des capteurs de caméra, des capteurs radar, des capteurs lidar.

5. Programme informatique, comprenant du code programme pour exécuter le procédé selon l'une quelconque des revendications 1 ou 2 lorsque le programme informatique est exécuté sur un ordinateur.
